# EUROPÄISCHE PATENTSCHRIFT

(11) **EP 1 003 654 B1**
(45) Veröffentlichungstag und Bekanntmachung des Hinweises auf die Patenterteilung: **12.06.2002**
(21) Anmeldenummer: 98933858.7
(22) Anmeldetag: 04.08.1998
(51) Int. Cl.: B60R 22/405

(54) **SICHERHEITSGURTAUFROLLER**
SEAT BELT RETRACTOR
ENROULEUR DE CEINTURE DE SECURITE

(30) Priorität: 12.08.1997 DE 19734907
(43) Veröffentlichungstag der Anmeldung: 31.05.2000
(73) Patentinhaber: BREED AUTOMOTIVE TECHNOLOGY, INC., Lakeland, FL 33807-3050 (US)
(72) Erfinder: SPECHT, Martin, D-82340 Feldafing (DE)
(74) Vertreter: Nöth, Heinz, Dipl.-Phys.
(86) Internationale Anmeldenummer: IB9801190
(87) Internationale Veröffentlichungsnummer: WO9907582

(56) Entgegenhaltungen:
- EP-A- 0 092 407
- EP-A- 0 631 911
- US-A- 4 603 819
- US-A- 5 205 025
- US-A- 5 487 515

## Beschreibung

Die Erfindung betrifft einen Sicherheitsgurtaufroller nach dem Oberbegriff des Patentanspruches 1.

Bei einem derartigen, aus der EP-A-0 631 911, bekannten Sicherheitsgurtaufroller ist an einem Rahmen zum Auf- und Abrollen des Sicherheitsgurtes eine Gurtspule drehbar gelagert. Zum Blockieren der Gurtspulendrehung, insbesondere bei überhöhter Fahrzeugbeschleunigung oder -abbremsung, z.B. bei einem Unfall, ist eine Blockiereinrichtung vorgesehen. Diese weist eine am Rahmen abgestützte Blockierklinke auf, welche mit einer entsprechenden Verzahnung an der Gurtspule in Eingriff gebracht wird. Die hierzu erforderliche Bewegung zwischen der Klinke und der Gurtspule bzw. zwischen der Gurtspule und dem Rahmen wird durch ein Steuerteil bewirkt, welches gurtbandsensitiv und/oder fahrzeugsensitiv aktiviert werden kann. Für die gurtbandsensitive Aktivierung des Steuerteils ist eine Gurtsensormasse vorgesehen, die an einem mit der Gurtspule mitdrehenden Trägerteil beweglich gelagert ist. Für die fahrzeugsensitive Aktivierung des Steuerteils ist eine Fahrzeugsensormasse vorgesehen. Sowohl die Gurtsensormasse als auch die Fahrzeugsensormasse betätigen eine Kupplungseinrichtung mit beweglichen Kupplungselementen am Trägerteil und Steuerteil, durch welche eine Bewegungsverbindung zwischen Trägerteil und Steuerteil hergestellt wird zur Übertragung einer Gurtspulendrehung in Abrollrichtung für die Betätigung der Blockiereinrichtung. Das Trägerteil mit der daran gelagerten Gurtsensormasse und das Steuerteil sind in einer vormontierten Baueinheit enthalten.

Um die Bewegungsübertragung der Gurtspulendrehung in Abrollrichtung zur Betätigung der Blockiereinrichtung für einen gesteuerten Blockiereingriff der Gurtspule am Rahmen bzw. eines am Rahmen abgestützten Blockierelements, insbesondere Blockierklinke, in die Gurtspule zu erreichen, ist es bei den bekannten Sicherheitsgurtaufrollern erforderlich, exakte Toleranzen der Bewegungsübertragungsmittel und der Blockiereingriffselemente in Bezug auf die Gurtspule einzuhalten. Dies bedingt einen hohen Herstellungsaufwand, insbesondere beim Zusammenbau der an der Mechanikseite des Gurtaufrollers vorhandenen Bauteile.

Aufgabe der Erfindung ist es daher, einen Sicherheitsgurtaufroller der eingangs genannten Art zu schaffen, bei welchem die Montage insbesondere der an der Mechanikseite vorgesehenen Bauteile erleichtert ist.

Diese Aufgabe wird erfindungsgemäß durch die Merkmale des Patentanspruches 1 gelöst.

Bei der Erfindung lassen sich die in der vormontierten Baueinheit vorgesehenen Bauteile bezüglich einer gemeinsamen Achse, welche nach dem Zusammenbau mit der Spulenachse zusammenfällt, exakt zueinander ausgerichtet vormontieren und durch die ein Drehlager bildende Steckverbindung am Rahmen oder einer am Rahmen befestigten Halterung aufstecken.

In bevorzugter Weise besitzt das Steuerteil einen die Baueinheit umfassenden Umfangsrand, auf welchem Clipselemente angeordnet sind. Diese Clipselemente können in entsprechend ausgebildete Clipselemente einer Halterung in der Weise eingeclipst werden, dass die Baueinheit und hier insbesondere das Steuerteil drehbar in der Halterung um die gemeinsame Achse drehgelagert ist. Die Halterung mit der drehbar darin gelagerten Baueinheit umfasst die gesamte Mechanikseite des Gurtaufrollers. Diese besteht aus den fahrzeugsensitiven und gurtbandsensitiven Bauteilen, aus dem Träger für den Gurtbandsensor, welcher mit der Gurtspule beim Aufstecken der Halterung auf den Rahmen drehfest mit der Gurtspule verbunden wird, und dem drehbar in der Halterung gelagerten Steuerteil, welches an das insbesondere als Klinkenrad ausgebildete Trägerteil gurtbandsensitiv und/oder fahrzeugsensitiv mittels entsprechender Kupplungselemente kuppelbar ist.

Um die Drehverbindung zwischen dem Trägerteil und der Gurtspule herzustellen, können Vorsprünge und zugeordnete Ausnehmungen am Trägerteil und der Gurtspule vorgesehen sein, die ineinander gesteckt werden.

Ferner wird erfindungsgemäß ein Sicherheitsgurt der eingangs genannten Art geschaffen, bei dem Kräfte, welche insbesondere während des Gurtbandstraffens durch beschleunigte Gurtspulendrehung auf das am Trägerteil gelagerte und von der Gurtsensormasse betätigte Kupplungselement einwirken, keinen Einfluß auf die Kupplungsfunktion haben.

Diese Aufgabe wird durch die kennzeichnenden Merkmale des Patentanspruches 15 gelöst.

Hierbei wird ein von der Gurtsensormasse betätigtes Kupplungselement, insbesondere in Form eines zweiseitigen Hebels, wie es aus der DE 195 01 679 A1 bekannt ist, mittels eines Stoßenergie absorbierenden Lagers am Trägerteil beweglich gelagert. Durch die stoßabsorbierenden Eigenschaften des Lagers für das Kupplungselement wirken die beim Straffen des Gurtbandes durch beschleunigten Drehantrieb der Gurtspule auf das Kupplungselement einwirkenden Kräfte sich nicht beeinträchtigend auf die Kupplungsfunktion aus. Beim Straffen, insbesondere beim Beginn des Straffens oder beim Wechsei zwischen den einzelnen Antriebsstufen bei mehrstufigem Strafferantrieb und am Ende des Straffvorgangs auftretende Wechselbelastungen werden vom Energie absorbierenden Lager des Kupplungselementes gedämpft, so daß es zu keinen Beschädigungen am Kupplungselement und an den Kupplungsteilen kommt, insbesondere Zähnen des Steuerteils, in welche das Kupplungselement mit seinem insbesondere als Klinke ausgebildeten Einrückteil eingreift.

Zur Bildung des Stoßenergie absorbierenden Lagers können am Kupplungselement eine oder mehrere stoßabsorbierende Lagerflächen, insbesondere in Abhängigkeit von der hauptsächlichen Belastungsrichtung vorgesehen sein. Wenn in mehreren Richtungen oder innerhalb eines größeren Winkelbereichs Belastungen auftreten, werden mehrere stoßabsorbierende Lagerflächen angeordnet. Bei einer bevorzugten Ausführungsform werden um einen Mittelpunkt drei oder mehr nachgiebige geradlinige Lagerflächen angeformt sein, die in einem gleichseitigen Vieleck, insbesondere Dreieck, angeordnet sind. In der ausgerückten Kupplungsstellung des Kupplungselements liegen die nachgiebigen Lagerflächen an abgerundeten Lagerstellen eines in der Mitte des Dreiecks am Trägerteil befestigten Lagerstiftes an. In eingerückter Stellung des Kupplungselements, d.h. bei Eingriff des Kupplungselements in das zugeordnete Kupplungselement am Steuerteil, beispielsweise in Form einer Verzahnung, liegen die nachgiebigen geradlinigen Lagerflächen des Kupplungselements an dann etwa parallel verlaufenden Stützflächen des Lagerstiftes flächig an. Diese werden beispielsweise durch Vorsprünge am Lagerstift, welche in gleichen Winkelabständen um die am Lagerstift definierte Schwenkachse des Kupplungselementes angeordnet sind, gebildet.

Die geradlinigen nachgiebigen Lagerflächen am Kupplungselement können durch Lamellen gebildet sein, die an ihrem einen Ende fest, insbesondere einstückig mit dem Kupplungselementenkörper verbunden sind und mit freien Enden in eine Ausnehmung des Kupplungselementekörpers ragen. Die Lamellen sind federnd nachgiebig ausgebildet, so daß hierduch die energieabsorbierende Wirkung bei überhöhten Belastungen des Kupplungselementes erreicht wird.

Es können ferner zusätzliche Lagerelemente vorgesehen sein, welche auf einem Kreis um die Schwenkachse des Kupplungselementes Stützflächen aufweisen. Ferner können Stützflächen an zusätzlichen Lagerelementen vorgesehen sein, an denen das Kupplungselement in seiner eingerückten Position zusätzlich abgestützt wird.

Ferner kann wenigstens an dem Hebelarm, an welchem das Einrückteil, insbesondere in Form einer Klinke am Kupplungselement vorgesehen ist, das Kupplungselement mit einer Stoßenergie absorbierenden Anlagefläche an der Gurtsensormasse anliegen. Diese Stoßenergie absorbierende Anlagefläche kann ebenfalls von einer federnd nachgiebigen Lamelle, welche einstückig an das Kupplungselement angeformt ist, gebildet werden.

Die Kupplungseinrichtung, welche einen den Hauptblockiervorgang einleitenden Vorblockierungszustand herstellt, kann ferner ein am Steuerteil beweglich, insbesondere schwenkbar gelagertes Kupplungselement, beispielsweise in Form einer Klinke, aufweisen. Dieses Kupplungselement wird durch die Fahrzeugsensormasse bei überhöht auf das Fahrzeug einwirkender Beschleunigung in Kupplungseingriff mit dem Trägerteil, insbesondere mit einer am scheibenförmig ausgebildeten Trägerteil umlaufenden Verzahnung, in Eingriff gebracht.

Durch die Kupplungseinrichtung kann somit ein Vorblockierungszustand zwischen dem bevorzugt als Klinkenrad ausgebildeten Trägerteil und dem Steuerteil, welches bei der Erfindung bevorzugt die äußere Umhüllung des vormontierten Bauteiles bildet, hergestellt werden. Dabei werden Steuerteil und Trägerteil drehfest zur Übertragung einer Spulendrehung in Gurtbandabrollrichtung zur Betätigung der Blockiereinrichtung miteinander verbunden.

In bevorzugter Weise beinhaltet die Blockiereinrichtung wenigstens eine am Rahmen abgestützte Blockierklinke, welche durch die Steuerbewegung des Steuerteils in Hauptblockiereingriff mit der Gurtspule gebracht werden kann. Hierzu wirkt zwischen der Blockierklinke und dem Steuerteil eine Steuerfläche, an welcher ein Bewegungsübertragungselement entlang geführt wird. Die Steuerfläche ist in bevorzugter Weise an der Blockierklinke vorgesehen und das Bewegungsübertragungselement, beispielsweise in Form eines Stiftes, am Steuerteil. Es ist jedoch auch möglich, die Steuerfläche am Steuerteil und das Bewegungsübertragungselement an der Blockierklinke vorzusehen.

An der Steuerfläche ist ein Endanschlag für die Bewegung des Bewegungsübertragungsgselementes vorgesehen. Dieser Endanschlag liegt in einer Überhubstellung, um Differenzen in den Winkelabständen der an der Vorblockierung und Hauptblockierung beteiligten Zähne auszugleichen.

Der Vorblockierungszustand kann natürlich auch in der Weise ausgenützt werden, daß bei einem Hubrollenautomaten die bei der Vorblockierung gegen weitere Drehung blockierte Gurtspule mit ihrer Blockierverzahnung in eine am Rahmen vorgesehene Gegenverzahnung in Eingriff gebracht wird.

In bevorzugter Weise sind das Steuerteil, das Trägerteil, welches als Klinkenrad ausgebildet sein kann, und die Kupplungselemente, welche gurtband- und fahrzeugsensitiv betätigbar sind, aus Kunststoff hergestellt. Die gurtbandsensitive und fahrzeugsensitive Sensormassen sind in herkömmlicher Weise aus Metall hergestellt.

Anhand der Figuren wird an einem Ausführungseispiel die Erfindung noch näher erläutert. Es zeigt:
- Fig. 1:: in perspektivischer auseinandergezogener Darstellung die Bauteile der Mechanikseite eines Sicherheitsgurtaufrollers, der ein Ausführungsbeispiel der Erfindung ist;
- Fig. 2:: eine Draufsicht der Anordnung der Gurtsensormasse und des zugeordneten Kupplungselements in normaler Betriebsstellung;
- Fig. 3:: eine Draufsicht der Anordnung der Gurtsensormasse und des zugeordneten Kupplunselements am Trägerteil in eingekuppelter Stellung (Vorblockierungszustand);
- Fig. 4:: in vergrößerter Darstellung das von der Gurtsensormasse betätigte Kupplungselement in der der Fig. 2 entsprechenden normalen Betriebsstellung;
- Fig. 5:: in vergrößerter Darstellung das von der Gurtsensormasse betätigte Kupplungselement in eingerückter Position, welche dem in Fig. 3 dargestellten Betriebszustand entspricht;
- Fig. 6:: in Draufsicht die der Gurtspule zugewandte Rückseite des Trägerteils in normaler Betriebsstellung;
- Fig. 7:: in Draufsicht die der Gurtspule zugewandte Rückseite des Trägerteils in der Vorblockierungsstellung;
- Fig. 8:: eine schnittbildliche Darstellung des als Klinkenrad ausgebildeten Trägerteils mit daran gelagerter Gurtsensormasse;
- Fig. 9:: eine schnittbildliche Zusammenbaudarstellung der Bauteile der Mechanikseite des Sicherheitsgurtaufrollers;
- Fig. 10:: in Seitenansicht die Positionierung einer Blockierklinke gegenüber der Gurtspule in Normalbetrieb;
- Fig. 11:: die Positionierung der Blockierklinke in Blockiereingriff mit der Blockierverzahnung der Gurtspule; und
- Fig. 12:: der Blockiereingriff der Blockierklinke in Überhubstellung.

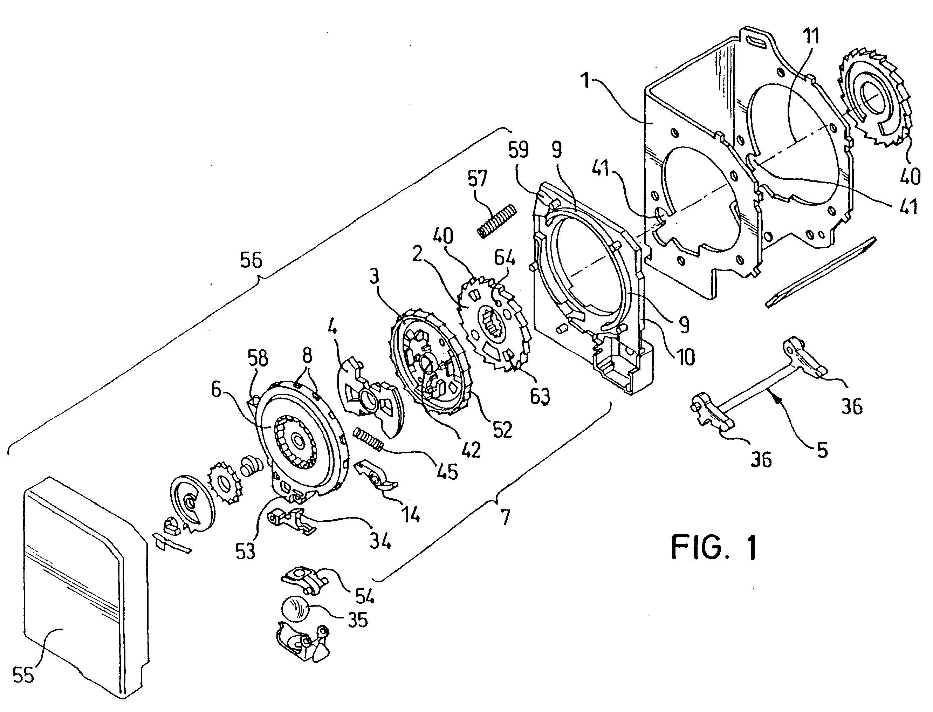

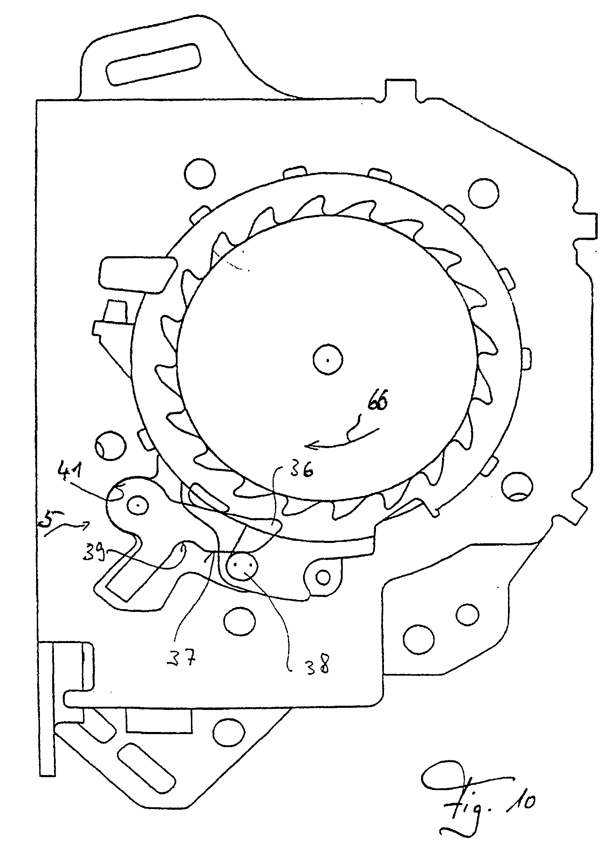

Wie aus der Fig. 1 zu ersehen ist, besitzt der Sicherheitsgurtaufroller einen U-förmigen Rahmen 1. In diesem Rahmen ist eine Gurtspule 2 (Fig. 9), von welcher in der Fig. 1 die seitlichen Zahnkränze dargestellt sind, zum Auf- und Abrollen eines Sicherheitsgurtbandes drehbar gelagert. In Aufrollrichtung wirkt eine nicht näher dargestellte Triebfeder an der Federseite des Rahmens 1. Zum Blockieren der Gurtspule 2 dient eine Blockiereinrichtung 5, welche beim dargestellten Ausführungsbeispiel Blockierklinken 36 für einen beidseitigen Blockiereingriff mit Blockierverzahnungen 40 der Gurtspule 2 aufweist. Die Blockiereinrichtung 5 ist am Rahmen 1 an Stützflächen 41 (Figuren 1 und 10 bis 12) schwenkbar abgestützt.

Zur sensorabhängigen Betätigung der Blockiereinrichtung 5 besitzt der Sicherheitsgurtaufroller eine Mechanikseite. Die Bauteile der Mechanikseite sind ein als Klinkenrad ausgebildetes Trägerteil 3, ein Steuerteil 6, eine Gurtbandsensormasse 4, welche drehbar am Trägerteil 3 gelagert ist, eine Fahrzeugsensormasse 35 sowie von den Gurtband- und Fahrzeugsensormassen betätigbare Kupplungselemente 14 und 34. Diese Bauteile werden beim dargestellten Ausführungsbeispiel, wie im einzelnen noch erläutert wird, zu einer Baueinheit vormontiert, die ein geschlossenes Toleranzsystem, welches unabhängig von der Gurtspule 2 ist, bilden.

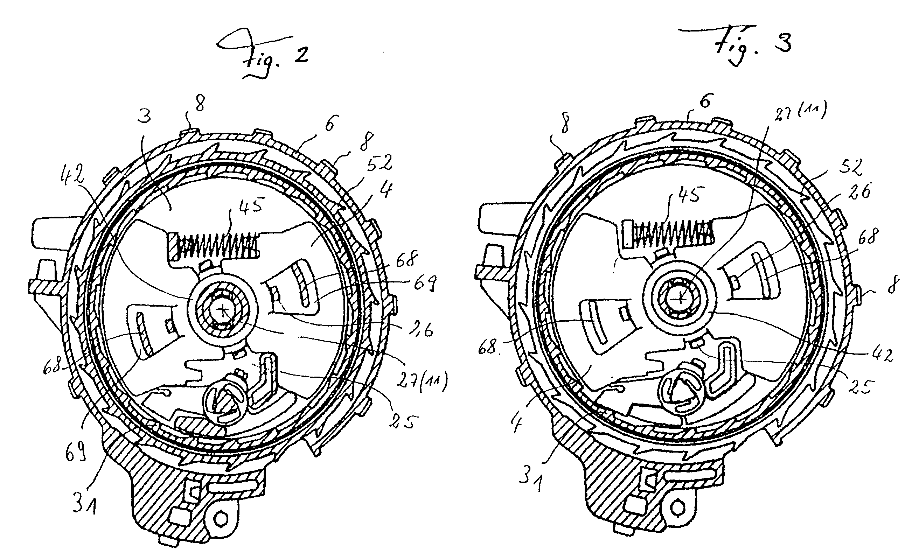

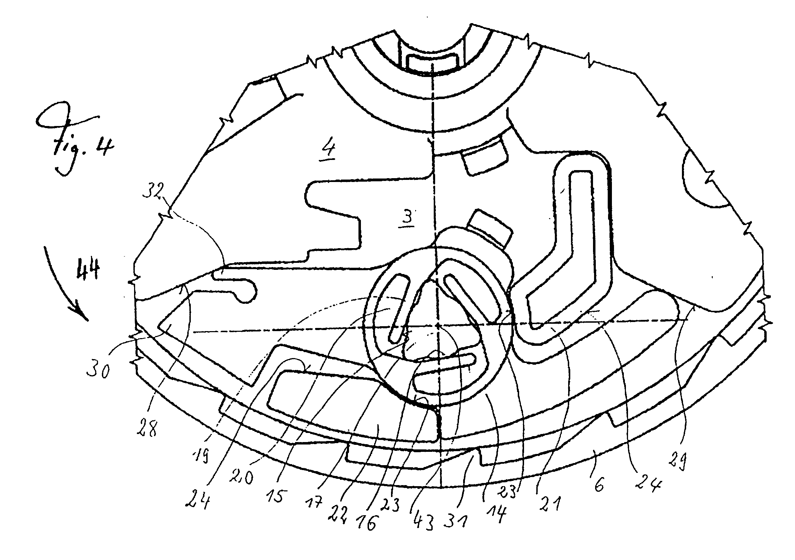

Wie aus den Figuren 2 und 3 zu ersehen ist, wird die Gurtsensormasse 4, welche aus Metall besteht, drehbar am Trägerteil 3 gelagert. Hierzu ist am Trägerteil 3 ein Lagerring 42 um eine Achse 27, welche im Zusammenbau mit der Spulenachse 11 zusammenfällt, angeformt. Um die Achse 27 sind ferner am Trägerteil 3 Clipselemente 25, 26 vorgesehen, welche in axialer Richtung die Gurtsensormasse 4 am Trägerteil 3 abstützen. Die Clipselemente können einstückig aus dem Trägerteilmaterial, insbesondere Kunststoff, gebildet sein. An der Gurtsensormasse 4 sind hierzu Clipsränder angeformt, die hinter den übergreifenden Clipselementen 43 im zusammengebauten Zustand liegen.

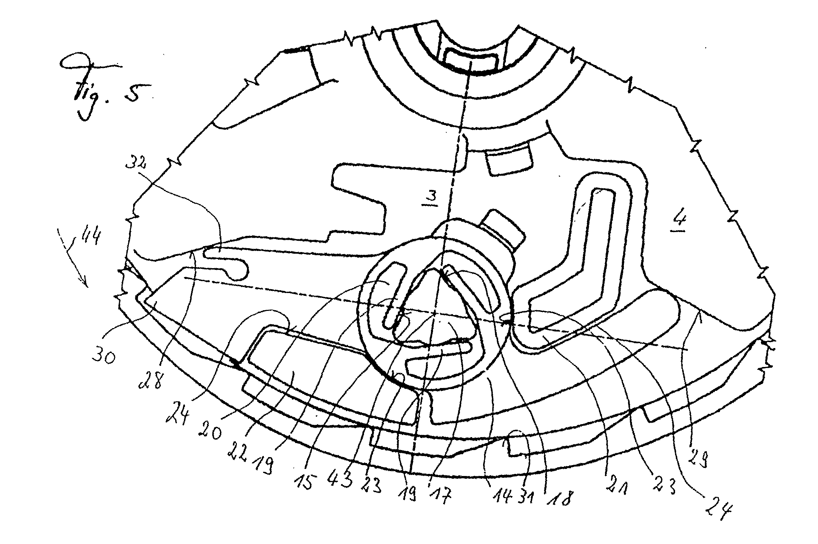

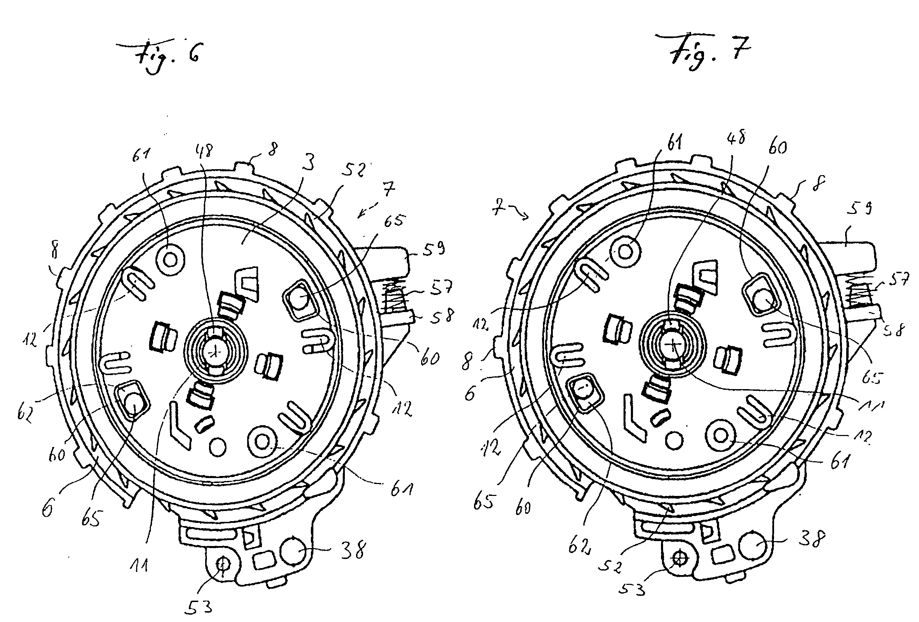

Wie in insbesondere auch aus den Figuren 4 und 5 zu ersehen ist, sind an der Gurtsensormasse 4 zwei Steuerflächen 28 und 29 vorgesehen. An diesen Steuerflächen liegen Hebelarme des als zweiseitiger Hebel ausgebildeten Kupplungselementes 14 an. Das Kupplungselement 14 ist um eine Achse 43 schwenkbar angeordnet. Die Achse 43 wird durch einen Lagerstift 17 definiert. Der Lagerstift 17 ist am Trägerteil 3 einstückig angeformt und kann ebenfalls aus Kunststoff bestehen.

Die Drehlagerung des als zweiseitiger Hebel ausgebildeten Kupplungselementes 14 am Trägerteil 3 ist Energie, insbesondere Stoßenergie absorbierend, ausgebildet. Hierzu sind in einer Ausnehmung 20 des Kupplungselementes 14 an den Kupplungselementkörper angeformte Lamellen 19 vorgesehen, die mit freien Enden in die Ausnehmung 20 ragen. Die Lamellen 19 bilden federnde geradlinige Lagerflächen 15, welche in normaler Betriebsstellung (Figuren 2 und 4) an abgerundeten Lagerstellen 16 des Lagerstiftes 17 anliegen. Im eingerückten Zustand (Figuren 3 und 5) liegen die geradlinigen Lagerflächen 15 des Kupplungselementes 14 an etwa parallel dazu verlaufenden Stützflächen 18, welche durch Vorsprünge am Lagerstift 17 gebildet werden, flächig an. In der eingerückten Stellung des Kupplungselementes 14 ergibt sich daher eine flächige Verbindung zwischen dem Lagerstift 17 und dem Kupplungselement 14, wobei die Lamellen 19, insbesondere bei Stoßbelastungen, welche während des Straffens des Gurtbandes durch beschleunigten Drehantrieb der Gurtspule auftreten können, Energie absorbierend wirken. Eine Zerstörung der Lagerstelle, insbesondere ein Abbrechen des Lagerstiftes, wird bei diesen extremen Wechselbelastungen verhindert.

Am Trägerteil 3 sind weitere Lagerelemente 21 und 22 einstückig, insbesondere aus Kunststoff bestehend, angeformt. Diese Lagerelemente 21 und 22 besitzen zusätzliche Stützflächen zur Abstützung des Kupplungselementes 14 am Trägerteil 3. Hierzu werden Stützflächen 23 gebildet, welche auf einem Kreis um die Schwenkachse 43 an die zusätzlichen Lagerelemente 21, 22 angeformt sind. Hierdurch wird zusätzlich zu den in einem gleichseitigen Dreieck am Lagerzapfen 17 anliegenden Lamellen 19 Drehlagerungselemente geschaffen, welche in den Stützflächen auf das Kupplungselement 14 einwirkende Kräfte aufnehmen können. Ferner können an den Lagerelementen 21 und 22 weitere Stützflächen 24 vorgesehen sein, an denen das Kupplungselement 14 in seiner eingerückten Position (Figuren 3 und 5) im Bereich seiner beiden Hebelarme anliegt.

An den Hebelarm, an welchem das Einrückteil 30 z. B. in Klinkenform am Kupplungselement 14 vorgesehen ist, befindet sich eine Stoßenergie absorbierende Lamelle 32, welche eine Stoßenergie absorbierende Anlagefläche des Kupplungselementes 14 an der Steuerfläche 29 der Gurtsensormasse 4 bildet. Stoßbelastungen, die an dieser Stelle auf das Kupplungselement 14, insbesondere beim Strafferantrieb einwirken, werden durch die Energie absorbierende Wirkung der angeformten Lamelle 32 gedämpft, so daß eine Zerstörung des Kupplungselementes 14 vermieden wird.

Während des Strafferantriebs bei beschleunigtem Drehantrieb der Gurtspule wird aufgrund der Drehverbindung zwischen dem Trägerteil 3 und der Gurtspule die Gurtsensormasse 4 und das Kupplungselement 14 ebenfalls um die Spulenachse 11 in Bandaufrollrichtung (Pfeil 44) angetrieben, wobei das Einrückteil 30 über das als Verzahnung ausgebildete Kupplungsteil 31 am Steuerteil 6 ratscht. Die dabei auftretenden Wechselbelastungen werden durch die Lamelle 32 und ferner durch die Energie absorbierende Lagerung, welche von den Lamellen 19 bewirkt wird, gedämpft und soweit reduziert, daß keine Zerstörungen auftreten.

Wie schon erläutert, wird zur Erzielung des Vorblockierungszustandes das Einrückteil 30 am Kupplungselement 14 in Eingriff mit dem in Form eines inneren Zahnkranzes am Steuerteil 6 vorgesehenen Kupplungsteil 31 in Eingriff gebracht (Figuren 3 und 5). Dies erfolgt dadurch, daß bei entsprechender beschleunigter Drehung der Gurtspule in Bandabwickelrichtung und damit verbundener beschleunigter Drehung des Drehteiles aufgrund der Trägheit der Gurtsensormasse 4 diese sich gegenüber dem Trägerteil 1 gegen die Kraft einer Sensorfeder 45 aus der in der Fig. 2 gezeigten Position in die in der Fig. 3 dargestellte Position um die Achse 27, welche mit der Spulenachse 11 zusammenfällt, verschwenkt. Dabei wird durch die Wirkung der Steuerfläche 29 auf das Kupplungselement 14 das Einrückteil 30 in das entsprechende als Verzahnung ausgebildete Kupplungselement 31 am Steuerteil 6 eingerückt.

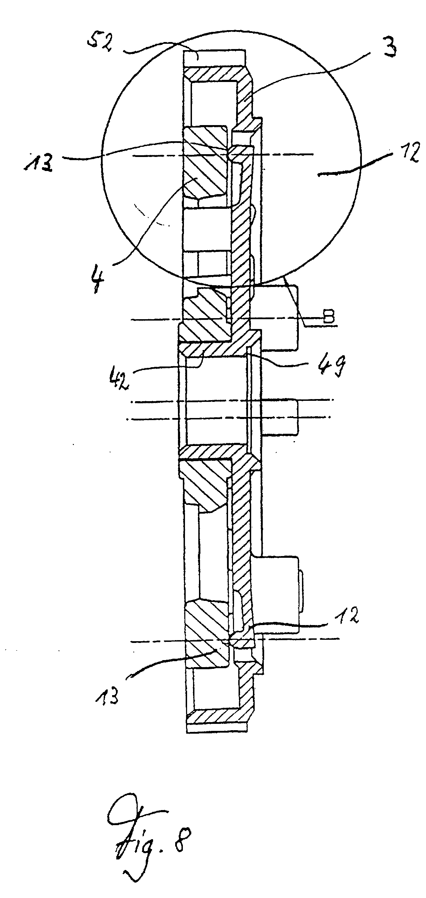

Hierdurch wird die den Vorblockierungszustand darstellende Drehverbindung zwischen dem Trägerteil 3 und dem Steuerteil 6 hergestellt. Wie insbesondere aus den Figuren 6, 7 und 9 zu ersehen ist, wird das als Klinkenrad ausgebildete Trägerteil 3, an welchem die Gurtsensormasse 4 und das Kupplungselement 14 in der beschriebenen Weise beweglich gelagert sind, zu einer Baueinheit mit dem Steuerteil 6, welches kappenförmig ausgebildet ist, zusammengebaut. Hierzu wird in eine mittlere Öffnung des Lagerringes 42 am Trägerteil 3 ein am Steuerteil 6 angeformter Lagerring 47 eingesetzt. Der Lagerring 47 wird aus Ringsegmenten gebildet, welche beim Zusammenfügen des Steuerteils und des Trägerteils radial nach innen verformbar sind und nach dem Zusammenstecken der beiden Teile sich wieder radial nach außen bewegen, so daß Clipselemente 48 an den freien Enden der Ringsegmente des Lagerteils 47 eine Auflageschulter 49 am Lagerring 42 übergreifen. Auf diese Weise sind das Trägerteil 3 und das Steuerteil 6 in axialer Richtung fest miteinander verbunden. Die Verbindung ist so, daß das Trägerteil 3 gegenüber dem Steuerteil 6 drehbar in der von den beiden Lagerringen 42 und 47 geschaffenen Drehlagerung zusammengehalten werden.

An der Außenfläche eines Umfangsrandes 50 am Steuerteil 6 befinden sich Vorsprünge 8, welche Clipselemente bilden, die in Eingriff kommen mit Clipselementen 9 an der Halterung 10. Die Halterung 10 kann dann mit Hilfe von Befestigungsmitteln 51, welche ebenfalls als Clipselemente oder Steckverbindungselemente ausgebildet sein können, am Rahmen 1 befestigt werden.

Die ineinander greifenden Clipselemente 8 und 9 am Außenumfang des Steuerteiles 6 und an der Halterung 10, welche auf konzentrischen Kreisen angeordnet sind, bilden beim Zusammenbau des vormontierten Bauteiles 7 ein Drehlager für die schwenkbare Anordnung des Steuerteiles 6 am Rahmen 1 bzw. in der Halterung 10. Das von den ineinander greifenden Clipselementen 8 und 9 gebildete Drehlager gewährleistet eine verschwenkbare Lagerung des Steuerteiles 6 um die Spulenachse 11.

Damit die Kupplungseinrichtung der Mechanikseite auch fahrzeugsensitiv anspricht, ist beim Ausführungsbeispiel am Steuerteil 6 ein weiteres Kupplungselement 34 mit einer Klinke, die in eine Verzahnung 52 am als Klinkenrad ausgebildeten Trägerteil 3 in Eingriff gebracht werden kann, vorgesehen. Die Eingriffsbewegung wird durch die Fahrzeugsensormasse 35 bewirkt, welche am Steuerteil 6 oder an der Halterung 10 gelagert sein kann. Bei einer überhöhten, auf das Fahrzeug wirkenden Beschleunigung verlagert sich die Fahrzeugsensormasse 35 und bewegt dadurch die am Kupplungselement 34 vorgesehene Klinke in Eingriff mit der Verzahnung 52 am Umfangsrand des scheibenförmig ausgebildeten Trägerteiles 3 (Klinkenrad). Eine Lagerstelle für die schwenkbare Lagerung des Kupplungselementes 34 an dem Steuerteil 6 ist mit 53 bezeichnet. Die Bewegung der kugelförmigen Fahrzeugsensormasse 35 kann über ein schwenkbar an der Halterung 10 vorgesehenes Bewegungsübertragungsteil 54 auf das Kupplungselement 34 übertragen werden. Hierdurch wird in Abhängigkeit von einer überhöhten Fahrzeugbeschleunigung der Vorblockierungszustand, d.h. die drehfeste Verbindung zwischen dem Trägerteil 3 und dem Steuerteil 6 hergestellt.

Nach der Montage der Baueinheit 7, bestehend aus dem Trägerteil 3 und dem Steuerteil 6 mit der zwischen ihren aufeinanderzu gerichteten Flächen angeordneten Gurtsensormasse 4 an der Halterung 10 und dem Einbau des Fahrzeugsensors (Fahrzeugsensormasse 35 und Bewegungsübertragungselement 54) kann eine Abdeckklappe 55 auf die Halterung 10 aufgeclipst werden. Diese vormontierte Baueinheit 56 kann dann an der Mechanikseite des Rahmens 1 befestigt werden.

Wie insbesondere aus den Figuren 6 und 7 zu ersehen ist, befinden sich die Clipselemente 8 auf der Außenfläche des kreisförmigen Umfangsrandes 50 am Steuerteil 6 innerhalb eines Winkelbereiches, der größer als 180°, insbesondere 250° bis 260°, beispielsweise 255°, beträgt. Hierdurch wird eine ausreichende reibungsarme Verschwenkbarkeit des Steuerteils an der Halterung 10 gewährleistet. Diese Verschwenkung erfolgt gegen die Kraft einer Haltefeder 57, welche zwischen einem Anschlag 58 am Steuerteil 6 und einem Anschlag 59 an der Halterung 10 eingespannt ist.

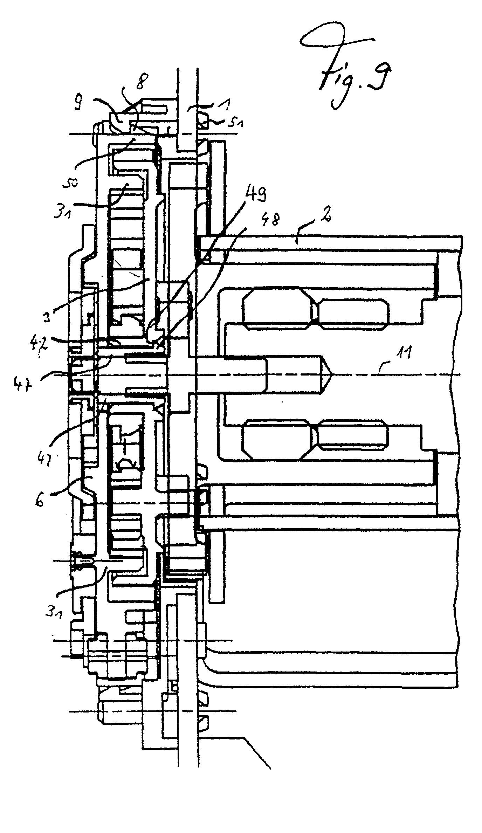

Wie insbesondere aus den Figuren 6 bis 8 zu ersehen ist, wird die am Trägerteil 1 schwenkbar gelagerte Gurtsensormasse 4 reibungsarm an abgerundeten Anlageflächen 13 gelagert. Die abgerundeten, insbesondere halbkugelförmig ausgebildeten Anlageflächen 13 befinden sich an Federelementen12, welche in Ausnehmungen der Scheibenfläche des Trägerteils 3 an den Trägerteilkörper angeformt sind. An den jeweiligen Spitzen der Federelemente befinden sich die abgerundeten Lagerflächen 13 für die Gurtsensormasse 4. In zusammengebautem Zustand befindet sich diese zwischen dem aufeinanderzu gerichteten Innenflächen des Trägerteils 3 und des Steuerteiles 3. Die Lagerung erfolgt jedoch reibungsarm am Trägerteil 3. Hierdurch wird eine definierte geräuschfreie axiale Positionierung mit geringer Reibung erreicht. Bei einer Tendenz der Gurtsensormasse 4, sich aus der Sollposition zu bewegen, bilden die Federelemente 12 Reaktionskräfte, welche die Beibehaltung der Sollposition gewährleisten.

An der Rückseite des Trägerteiles 3 befinden sich Vorsprünge 60 und 61, welche die drehfeste Verbindung mit der Gurtspule 2 herstellen. In der Gurtspule 2 sind hierzu entsprechende Ausnehmungen 63 und 64 (Fig. 1) vorgesehen. Die Vorsprünge 60 umfassen Ausnehmungen 63 im scheibenförmigen Teil des Trägerteiles 3. In diese Ausnehmungen ragen Vorsprünge 65, welche an die Gurtsensormasse 4 angeformt sind. Die seitlichen Begrenzungen der Ausnehmungen 62 sowie die Innenflächen der Vorsprünge 60, welche rahmenförmig ausgebildet sein können, bilden Anschläge zur Begrenzung des Schwenkwinkels, innerhalb welchen die Gurtsensormasse 4 schwenkbar am Trägerteil 3 gelagert ist. Neben den etwa trapezförmig ausgebildeten rahmenförmigen Vorsprüngen 60 sind die ringförmig ausgebildeten Vorsprünge 51 an der Rückseite des Trägerteils 3 vorgesehen. Die Ausnehmungen 63 und 64 an der Gurtspule 2 sind entsprechend geformt, so daß eine starre Drehverbindung zwischen dem Trägerteil 3 und der Spule 2 hergestellt wird. An der anderen Seiten des Trägerteils können weitere sich in Umfangsrichtung um die Achse 27 erstreckende längliche Anschläge 68 vorgesehen sein, welche in Ausnehmungen 69 der Gurtsensormasse 4 ragen.

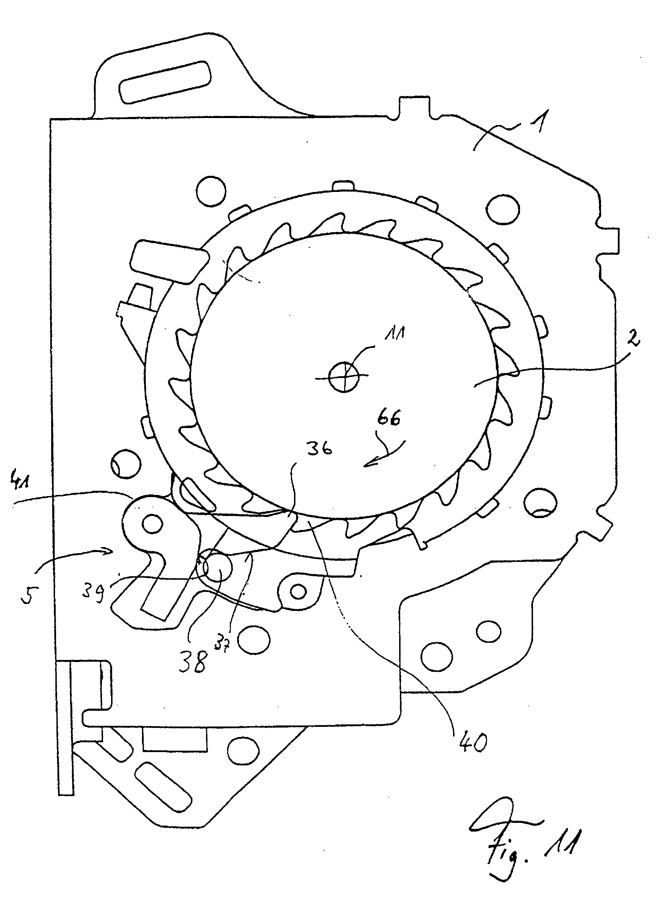

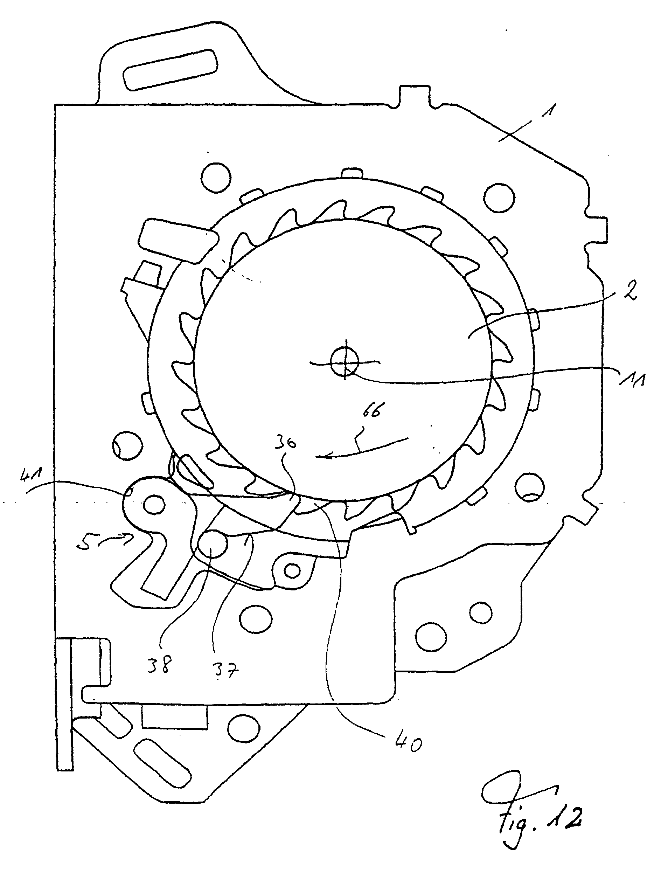

Wenn der oben erläuterte Vorblockierzustand (Drehverbindung zwischen Trägerteil 3 und Steuerteil 6) durch die aktivierte Kupplungseinrichtung fahrzeugsensitiv und/oder gurtbandsensitiv, beispielsweise bei einem Unfall hergestellt ist, wird eine Bewegung des Sicherheitsgurtbandes in Abrollrichtung auf das drehfest mit der Gurtspule 2 verbundene Steuerteil 6 übertragen. Das Steuerteil 6 wird in Abrollrichtung 66 (Figuren 6, 7, 10 bis 12) mitverschwenkt. Dabei wird ein am Steuerteil befestigtes Bewegungsübertragungsteil 38, beispielsweise in Form eines Stiftes, entlang einer Steuerfläche 37 an der Blokkiereinrichtung 5 geführt. Dabei werden die Blockierklinken 36 aus der in der Fig. 10 dargestellten normalen Betriebsstellung in die in Fig. 11 dargestellte Blockierstellung gebracht. In dieser Blockierstellung greifen die Blockierklinken 36 mit ihrem Eingriffsklinkenteil in die Blockierverzahnung 40 der Gurtspule 2 ein. Dieser Eingriff kann, wie aus der Fig. 1 zu ersehen ist, auf beiden Seiten der Gurtspule 2 erfolgen. Aus Abweichungen der Verzahnungsabstände resultierende Winkelunterschiede (bis zu 3°) werden durch eine an der Blockiereinrichtung 5 vorgesehene Überhubstellung, welche durch den Endanschlag 39 gebildet wird, kompensiert. Diese Überhubstellung ist in der Fig. 12 dargestellt. In dieser Überhubstellung befindet sich das Bewegungsübertragungsteil 38 an der Anschlagfläche 39, welche die Überhubstellung begrenzt. Durch den Eingriff der Blockierklinken 36 in die Blockierverzahnung 40 der Gurtspule 2 ist die Gurtspule 2 gegen weitere Drehung blockiert. Vom Gurtband in die Gurtspule 2 eingeleitete Kräfte werden über diese und die am Rahmen in den Stützflächen 41 abgestützten Blockierklinken 36 in den Rahmen 1 geleitet.

## Patentansprüche

1. Sicherheitsgurtaufroller mit
- einer an einem Rahmen (1) zum Auf- und Abrollen des Sicherheitsgurtes drehbar gelagerten Gurtspule (2);
- einer Blockiereinrichtung (5) zum Blockieren der Gurtspulendrehung;
- einem Steuerteil (6), durch welches die Blockiereinrichtung (5) betätigbar ist;
- einer Gurtsensormasse (4), die an einem mit. der Gurtspule (2) mitdrehenden Trägerteil (3) beweglich gelagert ist;
- einer Fahrzeugsensormasse (35) ;
- einer Kupplungseinrichtung (14, 34), mit welcher durch die Gurtsensormasse (4) und/oder Fahrzeugsensormasse (35) eine Bewegungsverbindung zwischen dem Trägerteil (3) und dem Steuerteil (6) herstellbar ist zur Übertragung einer Gurtspulendrehung in Abrollrichtung für die Betätigung der Blockiereinrichtung (5), wobei
- das Trägerteil (3) mit der daran gelagerten Gurtsensormasse (4) und das Steuerteil (6) in einer vormontierbaren Baueinheit (7) enthalten sind;
**dadurch gekennzeichnet, dass**
- die vormontierte Baueinheit (7) auf dem Rahmen (1) oder eine am Rahmen (1) befestigbare Halterung aufsteckbar ist, wobei
- ineinandergesteckte Verbindungselemente (8, 9) am Rahmen (1) oder an der Halterung (10) und an der vormontierten Baueinheit (7) ein Drehlager für das Steuerteil (6) um die Spulenachse (11) bilden.

2. Sicherheitsgurtaufroller nach Anspruch 1, **dadurch gekennzeichnet, daß** die vormontierbare Baueinheit (7) ferner die Elemente der Kupplungseinrichtung (14, 34) enthält.

3. Sicherheitsgunaufroller nach Anspruch 1 oder 2, **dadurch gekennzeichnet, daß** die Verbindungselemente (8, 9) als Clipselemente ausgebildet sind.

4. Sicherheitsgurtaufroller nach einem der Ansprüche 1 bis 3, **dadurch gekennzeichnet, daß** durch die Drehung des Steuerteils (6), welche mittels der ineinander gesteckten und gegeneinander um die Spulenachse (11) bewegbaren Verbindungselemente (8, 9) geführt ist, die Blokkiereinrichtung (5) betätigbar. ist.

5. Sicherheitsgurtaufroller nach einem der Ansprüche 1 bis 4, **dadurch gekennzeichnet, daß** die Clipselemente (9) an der vormontierten Baueinheit (7) in einem Winkel von mehr als 180° auf einem kreisförmigen Umfangsrand (50) des Steuerteils (6) liegen.

6. Sicherheitsgurtaufroller nach Anspruch 5, **dadurch gekennzeichnet, daß** die Clipselemente (9) auf dem kreisförmigen Umfangsrand (50) innerhalb eines Winkels von ca. 250° bis 260° liegen.

7. Sicherheitsgurtaufroller nach einem der Ansprüche 1 bis 6, **dadurch gekennzeichnet, daß** das von den Clipselementen (8, 9) geschaffene Drehlager ein radiales Spiel aufweist.

8. Sicherheitsgurtaufroller nach einem der Ansprüche 1 bis 7, **dadurch gekennzeichnet, daß** das Trägerteil (3) und das Steuerteil (6) zwei einander gegenüberliegende parallele und senkrecht zur Spulenachse (11) verlaufende Flächen aufweisen, zwischen denen die scheibenförmig ausgebildete Gurtsensormasse (4) um die Spulenachse (11) drehbar am Trägerteil (6) gelagert ist:

9. Sicherheitsgurtaufroller nach Anspruch 8, **dadurch gekennzeichnet, daß** gegen eine axiale Verlagerung der Gurtsensormasse (4) aus ihrer Sollposition Federelemente (12) zur Bildung von Reaktionskräften vorgesehen sind.

10. Sicherheitsgurtaufroller nach Anspruch 8 oder 9, **dadurch gekennzeichnet, daß** mehrere Federelemente (12) um die Spulenachse (11) bevorzugt auf einem Kreis angeordnet sind.

11. Sicherheitsgurtaufroller nach einem der Ansprüche 8 bis 10, **dadurch gekennzeichnet, daß** die Federelemente (12) einstückig am Trägerteil (3) angeformt sind.

12. Sicherheitsgurtaufroller nach einem der Ansprüche 8 bis 11, **dadurch gekennzeichnet, daß** die Federelemente (12) als Blattfedern ausgebildet sind.

13. Sicherheitsgurtaufroller nach einem der Ansprüche 8 bis 12, **dadurch gekennzeichnet, daß** jedes Federelement (12) eine abgerundete Anlagefläche (13) aufweist, an der die Gurtsensormasse (4) anliegt.

14. Sicherheitsgurtaufroller nach einem der Ansprüche 8 bis 13, **dadurch gekennzeichnet, daß** vier Federelemente (12) vorgesehen sind.

15. Sicherheitsgurtaufroller nach einem der Ansprüche 1 bis 14, **dadurch gekennzeichnet, daß** die Kupplungseinrichtung (14, 34) ferner ein am Steuerteil (6) beweglich gelagertes Kupplungselement (34) aufweist, das durch die Fahrzeugsensormasse (35) in Kupplungseingriff mit dem Trägerteil (3) einrückbar ist.

16. Sicherheitsgurtaufroller nach einem der Ansprüche 1 bis 15, **dadurch gekennzeichnet, daß** die Bewegung des Steuerteils (6) zur Betätigung der Blockiereinrichtung (5) mit einem Überhubeingriff des Steuerteils an der Blockiereinrichtung übertragbar ist.

17. Sicherheitsgurtaufroller nach einem der Ansprüche 1 bis 16, **dadurch gekennzeichnet, daß** die Blockiereinrichtung (5) wenigstens eine am Rahmen (1) abgestützte Blockierklinke (36) aufweist, die mit der Gurtspule (2) in Blockiereingriff durch das Steuerteil (6) bewegbar ist.

18. Sicherheitsgurtaufroller nach Anspruch 16 oder 17, **dadurch gekennzeichnet, daß** die Bewegung des Steuerteils (6) auf die Blockierklinke (36) durch ein an einer Steuerfläche (37) entlang geführtes Bewegungsübertragungselement (38) übertragbar ist, wobei an der Steuerfläche (37) ein Endanschlag (39), der die Überhubstellung bildet, vorgesehen ist.

19. Sicherheitsgurtaufroller nach einem der Ansprüche 1 bis 18, **dadurch gekennzeichnet, daß** das Steuerteil (6), das Trägerteil (3) und die Kupplungselemente (14 und 34) aus Kunststoff bestehen.

20. Sicherheitsgurtaufroller nach einem der Ansprüche 1 bis 19, **dadurch gekennzeichnet, daß** das Trägerteil (3) und das Steuerteil (6) durch eine Steckverbindung, welche gleichzeitig ein Drehlager (42, 47) für die drehbare Lagerung des Trägerteils (3) am Steuerteil (6) bildet, miteinander verbunden sind.

21. Sicherheitsgurtaufroller nach einem der Ansprüche 1 bis 20, **dadurch gekennzeichnet, daß** die das Drehlager (42, 47) bildende Steckverbindung durch eine Lagerhülse (42) am Trägerteil (3) und eine Lagerhülse (47) am Steuerteil (6), die ineinander mit axialer Sicherung (48, 49) gesteckt sind, gebildet ist.

## Claims

1. Seat belt retractor with
- a belt reel (2) rotatably mounted on a frame (1) for coiling and uncoiling the seat belt;
- a blocking device (5) for blocking rotation of the belt reel;
- a control part (6) with which the blocking device (5) can be actuated;
- a belt sensor mass (4) which is movably mounted on a carrier part (3) rotating with the belt reel (2);
- a vehicle sensor mass (35);
- a coupling device (14, 34) with which a moving connection between the carrier part (3) and the control part (6) can be produced by the belt sensor mass (4) and/or vehicle sensor mass (35) for transmitting a rotation of the belt reel in the uncoiling direction for actuation of the blocking device (5), whereby
- the carrier part (3) with the belt sensor mass (4) mounted thereon and the control part (6) form a unit (7) which can be preassembled;
**characterised in that**
- the preassembled unit (7) can be plugged on the frame (1) or a holder adapted to be fastened on the frame (1), whereby
- connecting elements (8, 9), plugged into one another on the frame (1) or on the holder (10) and on the preassembled unit (7) form a pivot bearing for the control part (6) round the reel axis (11).

2. Seat belt retractor according to claim 1, **characterised in that** the preassembled unit (7) further contains the elements of the coupling device (14, 34).

3. Seat belt retractor according to claim 1 or 2, **characterised in that** the connecting elements (8, 9) are clip elements.

4. Seat belt retractor according to one of claims 1 to 3, **characterised in that** the blocking device (5) can be actuated by the rotation of the control part (6) which is guided by means of the connecting elements (8, 9) which are plugged into one another and are movable relative to one another round the reel axis (11).

5. Seat belt retractor according to one of claims 1 to 4, **characterised in that** the clip elements (9) on the preassembled unit (7) are at an angle greater than 180° on a circular rim (50) of the control part (6).

6. Seat belt retractor according to claim 5, **characterised in that** the clip elements (9) are within an angle of about 250° to 260° on the circular rim (50).

7. Seat belt retractor according to one of claims 1 to 6, **characterised in that** the pivot bearing created by the clip elements (8, 9) has radial play.

8. Seat belt retractor according to one of claims 1 to 7, **characterised in that** the carrier part (3) and the control part (6) have two mutually opposed parallel faces which extend perpendicularly to the reel axis (11) and between which the belt sensor mass (4) designed in the form of a disc is mounted rotatably round the reel axis (11) on the carrier part (6).

9. Seat belt retractor according to claim 8, **characterised in that** spring elements (12) are provided for forming reaction forces against axial displacement of the belt sensor mass (4) from its set position.

10. Seat belt retractor according to claim 8 or 9, **characterised in that** a plurality of spring elements (12) are arranged preferably in a circle round the reel axis (11).

11. Seat belt retractor according to one of claims 8 to 10, **characterised in that** the spring elements (12) are shaped integrally on the carrier part (3).

12. Seat belt retractor according to one of claims 8 to 11, **characterised in that** the spring elements (12) are designed as leaf springs.

13. Seat belt retractor according to one of claims 8 to 12, **characterised in that** each spring element (12) has a rounded contact face (13) against which the belt sensor mass (4) rests.

14. Seat belt retractor according to one of claims 8 to 13, **characterised in that** four spring elements (12) are provided.

15. Seat belt retractor according to one of claims 1 to 14, **characterised in that** the coupling device (14, 34) has a coupling element (34) which is movably mounted on the control part (6) and which can be brought into coupling engagement with the carrier part (3) by the vehicle sensor mass (35).

16. Seat belt retractor according to one of claims 1 to 15, **characterised in that** the movement of the control part (6) for actuating the blocking device (5) can be transmitted by overtravel engagement of the control part on the blocking device.

17. Seat belt retractor according to one of claims 1 to 16, **characterised in that** the blocking device (5) comprises at least one blocking pawl (36) which is supported on the frame (1) and which can be moved in blocking engagement with the belt reel (2) by the control part (6).

18. Seat belt retractor according to claim 16 or 17, **characterised in that** the movement of the control part (6) can be transmitted onto the blocking pawl (36) by a movement-transmitting element (38) guided along a control face (37), whereby an end stop (39) which forms the overtravel position, is provided on the control face (37).

19. Seat belt retractor according to one of claims 1 to 18, **characterised in that** the control part (6), the carrier part (3) and the coupling elements (14 and 34) consist of plastics material.

20. Seat belt retractor according to one of claims 1 to 19, **characterised in that** the carrier part (3) and the control part (6) are connected to one another by a plug-in connection which simultaneously forms a pivot bearing (42, 47) for the rotatable mounting of the carrier part (3) on the control part (6).

21. Seat belt retractor according to one of claims 1 to 20, **characterised in that** the plug-in connection forming the pivot bearing (42, 47) is formed by a bearing bush (42) on the carrier part (3) and a bearing bush (47) on the control part (6) which are plugged into one another with an axial securing means (48, 49).

## Revendications

1. Enrouleur de ceinture de sécurité, comprenant:
- une bobine de la ceinture (2) agencée par rotation sur un cadre (1) en vue de l'enroulement et du déroulement de la ceinture de sécurité;
- un dispositif de blocage (5) servant au blocage de la rotation de la bobine de la ceinture;
- un élément de commande (6) permettant d'actionner le dispositif de blocage (5);
- une masse de détection de la ceinture (4), agencée de manière mobile sur un élément de support (3) tournant avec la bobine de la ceinture (2);
- une masse de détection du véhicule (35);
- un dispositif d'accouplement (14, 34) permettant d'établir une liaison de mouvement entre l'élément de support (3) et l'élément de commande (6) par l'intermédiaire de la masse de détection de la ceinture (4) et/ou de la masse de détection du véhicule (35), servant à la transmission d'une rotation de la bobine de la ceinture dans la direction de déroulement en vue de l'actionnement du dispositif de blocage (5);
- l'élément de support (3) et la masse de détection de la ceinture (4) qui y est agencée ainsi que l'élément de commande (6) étant contenus dans un module qui peut être prémonté (7);
**caractérisée ce que**:
- le module prémonté (7) peut être inséré sur le cadre (1) ou sur un dispositif de retenue qui peut être fixé sur le cadre (1),
les éléments de liaison assemblés (8, 9) établissant ainsi sur le cadre (1) ou sur le dispositif de retenue (10) et sur le module prémonté (7) un palier pivotant pour l'élément de commande (6) autour de l'axe de la bobine (11).

2. Enrouleur de ceinture de sécurité selon la revendication 1, **caractérisé en ce que** le module à prémontage (7) contient en outre les éléments du dispositif d'accouplement (14, 34).

3. Enrouleur de ceinture de sécurité selon les revendications 1 ou 2, **caractérisé en ce que** les éléments de raccordement (8, 9) ont la forme d'éléments d'accrochage.

4. Enrouleur de ceinture de sécurité selon les revendications 1 à 3, **caractérisé en ce que** la rotation de l'élément de commande (6), guidée par les éléments de raccordement (8, 9) assemblés par insertion et pouvant être déplacés de manière opposée autour de l'axe de la bobine (11) permet l'actionnement du dispositif de blocage (5).

5. Enrouleur de ceinture de sécurité selon les revendications 1 à 4, **caractérisé en ce que** les éléments d'accrochage (9) sont agencés sur le module prémonté (7) à un angle de plus de 180° sur un bord circonférentiel circulaire (50) de l'élément de commande (6).

6. Enrouleur de ceinture de sécurité selon la revendication 5, **caractérisé en ce que** les éléments d'accrochage (9) sont agencés sur le bord circonférentiel circulaire (50) à un angle compris entre environ 250° et 260°.

7. Enrouleur de ceinture de sécurité selon l'une des revendications 1 à 6, **caractérisé en ce que** le palier pivotant établi par les éléments d'accrochage (8, 9) présente un jeu radial.

8. Enrouleur de ceinture de sécurité selon l'une des revendications 1 à 7, **caractérisé en ce que** l'élément de support (3) et l'élément de commande (6) comportent deux surfaces opposées de manière parallèle et s'étendant perpendiculairement à l'axe de la bobine (11), la masse de détection de la ceinture (4) en forme de disque étant agencée entre celles-ci, de façon à pouvoir tourner autour de l'axe de la bobine (11) sur l'élément de support.

9. Enrouleur de ceinture de sécurité selon la revendication 8, **caractérisé en ce que** des éléments de ressort (12), destinés à produire des forces de réaction, servent à empêcher un déplacement axial de la masse de détection de la ceinture (4) hors de sa position de consigne.

10. Enrouleur de ceinture de sécurité selon les revendications 8 ou 9, **caractérisé en ce que** plusieurs éléments de ressort (12) sont agencés autour de l'axe de la bobine (11), de préférence dans un cercle.

11. Enrouleur de ceinture de sécurité selon l'une des revendications 8 à 10, **caractérisé en ce que** les éléments de ressort (12) sont formés d'une seule pièce sur l'élément de support (3).

12. Enrouleur de ceinture de sécurité selon l'une des revendications 8 à 11, **caractérisé en ce que** les éléments de ressort (12) ont la forme de ressort à lames.

13. Enrouleur de ceinture de sécurité selon l'une des revendications 8 à 12, **caractérisé en ce que** chaque élément de ressort (12) comporte une surface d'appui arrondie (13), contre laquelle repose la masse de détection de la ceinture (4).

14. Enrouleur de ceinture de sécurité selon l'une des revendications 8 à 13, **caractérisé en ce qu'**il comporte quatre éléments de ressort (12).

15. Enrouleur de ceinture de sécurité selon l'une des revendications 1 à 14, **caractérisé en ce que** le dispositif d'accouplement (14, 34) comporte un élément d'accouplement (34) agencé de manière mobile sur l'élément de commande (6) et pouvant s'engager par accouplement par l'intermédiaire de la masse de détection du véhicule (35) dans l'élément de support (3).

16. Enrouleur de ceinture de sécurité selon l'une des revendications 1 à 15, **caractérisé en ce que** le mouvement de l'élément de commande (6) peut être transmis par un engagement de fin de course de l'élément de commande dans le dispositif de blocage en vue de l'actionnement du dispositif de blocage (5).

17. Enrouleur de ceinture de sécurité selon l'une des revendications 1 à 16, **caractérisé en ce que** le dispositif de blocage (5) comporte au moins un cliquet de blocage (36) supporte sur le cadre (1) pouvant etre engage par blocage dans la bobine de la ceinture (2) par l'intermédiaire de l'élément de commande (6).

18. Enrouleur de ceinture de sécurité selon les revendications 16 ou 17, **caractérisé en ce que** le mouvement de l'élément de commande (6) peut être transmis au cliquet de blocage (36) par un élément de transmission du mouvement (38) guidé le long d'une surface de commande (37), la surface de commande (37) comportant une butée d'extrémité (39) constituant la position de fin de course.

19. Enrouleur de ceinture de sécurité selon l'une des revendications 1 à 18, **caractérisé en ce que** l'élément de commande (6), l'élément de support (3) et les éléments d'accouplement (14 et 34) sont composés de plastique.

20. Enrouleur de ceinture de sécurité selon l'une des revendications 1 à 19, **caractérisé en ce que** l'élément de support (3) et l'élément de commande (6) sont reliés par un raccordement par insertion, constituant simultanément un palier pivotant (42, 47) pour le support rotatif de l'élément de support (3) sur l'élément de commande (6).

21. Enrouleur de ceinture de sécurité selon l'une des revendications 1 à 20, **caractérisé en ce que** le raccordement par insertion constituant le palier pivotant (42, 47) est formé par une douille de palier (42) sur l'élément de support (3) et une douille de palier (47) sur l'élément de commande (6), insérées l'une dans l'autre avec une fixation axiale (48, 49).
